# EUROPÄISCHE PATENTSCHRIFT

(11) **EP 1 157 053 B1**
(45) Veröffentlichungstag und Bekanntmachung des Hinweises auf die Patenterteilung: **17.09.2003**
(21) Anmeldenummer: 99965504.6
(22) Anmeldetag: 21.12.1999
(51) Int. Cl.: C08F 292/00, C08L 51/10, C08F 291/00, C08L 51/00, C09D 151/00, C09J 151/00

(54) **FÜLLSTOFFHALTIGE POLYMERDISPERSION, VERFAHREN ZU DEREN HERSTELLUNG UND DEREN VERWENDUNG**
FILLER-CONTAINING POLYMER DISPERSION, METHOD FOR ITS PRODUCTION AND ITS USE
DISPERSION POLYMERE CONTENANT UNE CHARGE, PROCEDE PERMETTANT DE LA PREPARER ET SON UTILISATION

(30) Priorität: 30.12.1998 CL 317798; 02.02.1999 DE 19903801
(43) Veröffentlichungstag der Anmeldung: 28.11.2001
(73) Patentinhaber: Henkel Kommanditgesellschaft auf Aktien, 40589 Düsseldorf (DE); Henkel Chile S.A., Santiago de Chile (CL)
(72) Erfinder: Pavez Aranguiz, Roberto, Graneros, IV Region (CL)
(86) Internationale Anmeldenummer: EP9910151
(87) Internationale Veröffentlichungsnummer: WO00040629

(56) Entgegenhaltungen:
- EP-A- 0 718 329
- GB-A- 2 035 342
- US-A- 3 884 871
- US-A- 4 272 424

## Beschreibung

Die Erfindung betrifft eine füllstoffhaltige Polymerdispersion, die organische oder anorganische Füllstoffpartikel und Partikel wenigstens eines synthetischen organischen Polymeren enthält, wobei das Verhältnis der Teilchengröße der Füllstoffpartikel zur Teilchengröße der Polymerpartikel 1,1:1 bis 20:1 beträgt.

Polymerpartikel mit einem Durchmesser von etwa 0,01 bis etwa 30 µm spielen eine große Rolle in vielen Bereichen der Kunststofftechnik. Besonders im Bereich der Verklebung von Gegenständen oder der Beschichtung von Oberflächen werden häufig Klebstoffe oder Beschichtungsmittel eingesetzt, die Polymerpartikel in dieser Größe enthalten. Beispielhaft für den Anwendungsbereich sind die dekorative Oberflächenbeschichtung in Form von Lackierungen oder sonstigen Überzügen, sowie die Verklebung von zwei Oberflächen mit gleichen oder unterschiedlichen Eigenschaften mit Klebstoffen, wie sie häufig in der Verbindungstechnik zum Tragen kommt.

Die genannten Polymerpartikel werden in der Regel durch Polymerisation olefinisch ungesättigter Monomerer hergestellt, deren Eigenschaften durch die Polymerisation von Gemischen verschiedener Monomerer, beispielsweise in der Co- oder Terpolymerisation, verändert werden können. Die veränderten Eigenschaften eines einzelnen Polymerpartikels übertragen sich in der Regel als kollektive Eigenschaft auf eine mit Hilfe solcher Polymerpartikel hergestellte Oberflächenbeschichtung oder Verklebung. Kollektive Eigenschaften, die häufig einer anwendungsabhängigen Modifizierung unterworfen werden, sind beispielsweise Härte, Elastizität sowie insbesondere im Bereich von Klebstoffanwendungen, Klebestärke, offene Zeit oder Anfangshaftung.

Ebenfalls eine hohe Bedeutung besitzen bestimmte Eigenschaften des zur Herstellung des Überzugs oder der Verklebung eingesetzten Mittels, beispielsweise des Oberflächenbeschichtungsmittels oder des Klebstoffs. In diesem Zusammenhang werden in Abhängigkeit von der gewünschten Anwendung häufig die Viskosität, das Fließverhalten oder der Restmonomergehalt modifiziert.

Oft werden zur Modifizierung der genannten Eigenschaften einer Oberflächenbeschichtung oder einer Verklebung einem Polymerpartikel enthaltenden Oberflächenbeschichtungsmittel oder einem solchen Klebstoff, anorganische oder organische Füllstoffe zugesetzt, die, im Falle anorganischer Füllstoffe, den Anteil an organischem Polymermaterial in der Beschichtung reduzieren und damit zu größerer Härte der Beschichtung sowie Schonung von Umwelt und Rohstoffen, aufgrund eines geringeren Gehalts an organischen Polymeren, beitragen. Organische Füllstoffe können beispielsweise einer Polymerdispersion bestimmte kombinierte Eigenschaften der darin enthaltenen Füllstoff- und Polymerpartikel verleihen.

Während Abmischungen von Polymerpartikeln und Füllstoffen im Bereich der Oberflächenbeschichtung häufig zu stumpfen und rauhen Oberflächen führen, wirken sie sich bei Klebstoffen jedoch häufig dergestalt aus, daß die Klebkraft und die Elastizität von Klebeverbindungen stark reduziert wird. Darüber hinaus trägt die Anwesenheit von Füllstoffen in Polymerdispersionen oft zu einer Verringerung der Anfangsklebkraft bei.

Insbesondere im Bereich der hochwertigen Anwendungen von Oberflächenbeschichtungen und Verklebungen, wie Hochglanzlackierungen oder Verklebungen im Papier- oder Möbelbereich, machen sich solche Effekte drastisch bemerkbar. Häufig wird beispielsweise eine signifikante Verringerung der abschließenden Klebkraft auf Holz festgestellt, die zudem von einer reduzierten Anfangshaftung begleitet wird.

Die EP-A 0 392 065 betrifft polymerumhüllte Füllstoffpartikel, bei denen ein Füllstoffkern mit einer Hülle eines hydrophoben Polymeren überzogen wird. Zur Herstellung solcher polymerumhüllten Partikel wird ein Monomeres in Gegenwart von Füllstoffpartikeln und einem amphiphilen Polymeren in wäßriger Dispersion polymerisiert. Die Druckschrift enthält keine Lehre zur Herstellung füllstoffhaltiger Polymerdispersionen, in denen die Füllstoffpartikel und die Polymerpartikel im wesentlichen nebeneinander vorliegen.

Die DE-OS 22 43 687 betrifft ein Klebemittel, insbesondere zur Herstellung von Wellpappe. Die Druckschrift beschreibt zwar eine Polymerdispersion, in der Polymerteilchen und mineralische Teilchen zusammen vorliegen und gibt Größenbereiche für die jeweiligen Teilchen an. Eine Lehre bezüglich des Größenverhältnisses der Teilchen im Sinne des vorliegenden Textes wird in dieser Druckschrift jedoch nicht gegeben.

Es war demnach eine Aufgabe der vorliegenden Erfindung, den oben genannten Nachteilen der aus dem Stand der Technik bekannten Gemische aus Polymerpartikeln und Füllstoffen abzuhelfen. Insbesondere war es eine Aufgabe der Erfindung, eine füllstoffhaltige Polymerdispersion zur Verfügung zu stellen, welche die Vorteile der aus dem Stand der Technik bekannten Abmischungen von Polymerpartikeln und Füllstoffen unter Vermeidung der aus dem Stand der Technik bekannten Nachteile aufweist.

Eine besondere Aufgabe der vorliegenden Erfindung bestand demnach darin, eine füllstoffhaltige Polymerdispersion zur Verfügung zu stellen, die zur Herstellung hochwertiger Oberflächenbeschichtungen oder Verklebungen eingesetzt werden kann.

Weiterhin war es eine Aufgabe der vorliegenden Erfindung eine füllstoffhaltige Polymerdispersion zur Verfügung zu stellen, die als Klebstoff mit hoher Klebkraft, insbesondere auf Holz, einsetzbar ist.

Eine weitere Aufgabe der Erfindung bestand darin, eine füllstoffhaltige Polymerdispersion zur Verfügung zu stellen, die einen geringen Restmonomergehalt aufweist.

Weiterhin bestand eine Aufgabe der Erfindung darin, einen Klebstoff zur Verfügung zu stellen, der eine ausreichende offene Zeit aufweist, sowie über hohe Anfangshaftung und eine niedrige Viskosität bei einem ausgezeichneten Fließverhalten verfügt.

Eine weitere Aufgabe der Erfindung bestand darin, ein Verfahren zur Herstellung solcher füllstoffhaltiger Polymerdispersionen zur Verfügung zu stellen.

Gelöst werden die oben genannten Aufgaben durch eine füllstoffhaltige Polymerdispersion, die organische oder anorganische Füllstoffpartikel und Partikel wenigstens eines synthetischen organischen Polymeren das in Gegenwart der Füllstoffpartikel polymerisiert wurde enthält, wobei das Verhältnis der Teilchendurchmesser der Füllstoffpartikel zum Teilchendurchmesser der Polymerpartikel 1,1:1 bis 20:1 beträgt.

Gegenstand der Erfindung ist daher eine füllstoffhaltige Polymerdispersion, die Wasser, Partikel mindestens eines organischen oder mindestens eines anorganischen Füllstoffs oder deren Gemisch (Füllstoffpartikel), und Partikel mindestens eines synthetischen organischen Polymeren das in Gegenwart mindestens einer Sorte von Füllstoffpartikeln polymerisiert wurde (Polymerpartikel) enthält, dadurch gekennzeichnet, daß das Verhältnis der Teilchengröße der Füllstoffpartikel zur Teilchengröße der Polymerpartikel 1,1:1 bis 20:1 beträgt

Es wurde festgestellt, daß sich mit Hilfe solcher Polymerdispersionen Oberflächenbeschichtungsmittel und Oberflächenbeschichtungen, sowie Klebstoffe und Klebeverbindungen erhalten lassen, welche in bezug auf offene Zeit, Klebkraft und Anfangshaftung mit Beschichtungen ohne Füllstoffgehalt mindestens vergleichbar sind, aber den aus dem Stand der Technik bekannten füllstoffhaltigen Systemen überlegen sind. Die erfindungsgemäßen, füllstoffhaltigen Polymerdispersionen zeigen zudem in der Regel eine geringere Viskosität und ein besseres Fließverhalten als die aus dem Stand der Technik bekannten, in bezug auf Polymergehalt und Füllstoffgehalt vergleichbaren Systeme.

Ein erfindungsgemäßes Verfahren zur Herstellung solcher füllstoffhaltiger Polymerdispersionen zeichnet sich gegenüber den aus dem Stand der Technik bekannten Polymerisationsverfahren zudem dadurch aus, daß es die Polymerisationszeit gegenüber vergleichbaren Systemen verkürzt, eine einfachere Temperaturkontrolle ermöglicht und zu Polymerdispersionen führt, die gegenüber Polymerdispersionen, die gemäß aus dem Strand der Technik bekannten Polymerisationsverfahren hergestellt wurden, einen reduzierten Gehalt an Restmonomeren aufweisen.

Gegenstand der Erfindung ist daher eine füllstoffhaltige Polymerdispersion, die Wasser, Partikel eines organischen oder anorganischen Füllstoffs (Füllstoffpartikel), oder eines Gemischs aus zwei oder mehr organischen oder anorganischen Füllstoffen oder ein Gemisch aus zwei oder mehr davon, und Partikel mindestens eines synthetischen organischen Polymeren das in Gegenwart des Füllstoffs oder der Füllstoffe polymerisiert wurde (Polymerpartikel) enthält, wobei das Verhältnis der Teilchengröße der Füllstoffpartikel zur Teilchengröße der Polymerpartikel 1,1:1 bis 20:1 beträgt.

Die erfindungsgemäße Polymerdispersion enthält also entweder eine Sorte anorganischer Füllstoffpartikel oder eine Sorte organischer Füllstoffpartikel oder zwei oder mehr verschiedene Sorten anorganischer Füllstoffpartikel oder zwei oder mehr verschiedene Sorten organischer Füllstoffpartikel oder eine Sorte anorganischer Füllstoffpartikel und zwei oder mehr verschiedene Sorten organischer Füllstoffpartikel oder eine Sorte organischer Füllstoffpartikel und oder zwei oder mehr verschiedene Sorten anorganischer Füllstoffpartikel oder zwei oder mehr verschiedene Sorten anorganischer Füllstoffpartikel und zwei oder mehr verschiedene Sorten organischer Füllstoffpartikel.

Im Hinblick auf organische Polymerpartikel in der erfindungsgemäßen Dispersion unterscheiden sich die organischen Füllstoffpartikel und die (ebenfalls organischen)Polymerpartikel dahingehend, daß die organischen Polymerpartikel in Gegenwart der Füllstoffpartikel entstehen, die Polymerisation der Polymerpartikel also in Gegenwart der Füllstoffpartikel abläuft. Der erfindungsgemäße Effekt wird dabei auch dann erzielt, wenn organische Füllstoffpartikel und Polymerpartikel im wesentlichen die gleiche Monomerzusammensetzung aufweisen. In einer bevorzugten Ausführungsform der Erfindung weisen organische Füllstoffpartikel und Polymerpartikel jedoch eine unterschiedliche Monomerenzusammensetzung auf.

Unter den Begriffen "Teilchengröße" oder "Partikelgröße", die im Rahmen des vorliegenden Textes synonym benutzt werden, wird im Rahmen der vorliegenden Erfindung der üblicherweise als "d50" bezeichnete Wert verstanden, d. h., der Wert bei dem etwa 50 % der Partikel einen kleineren Durchmesser und etwa 50 % der Partikel einen größeren Durchmesser aufweisen. Zur Bestimmung dieses Werts eignen sich grundsätzlich alle Partikelmeßverfahren, beispielsweise Meßverfahren, die auf dem Prinzip der Lichtbeugung ruhen. Die im Rahmen der vorliegenden Erfindung angegebenen Daten für Teilchengrößen beziehen sich auf Messungen mit dem Gerät MASTERSIZER X, von der Firma Malvern Instruments, Herrsching, Deutschland, (Version 1.2b). Die Funktionsweise dieses Apparates beruht auf der Beugung eines Lichtstrahles, indem die Partikelgröße mit dem Beugungswinkel in Zusammenhang gebracht wird.

Weitere Verfähren zur Bestimmung von Teilchengrößen sind beispielsweise die Granulometrie, bei der in einem geeigneten Dispersionsmittel eine gleichmäßige Aufschlämmung einer kleinen Menge des zu untersuchenden Pulvers hergestellt wird und diese dann der Sedimentation ausgesetzt wird. Aus dem nach dem Stokes-Gesetz gegebenen Zusammenhang zwischen Größe und Dichte der als kugelförmig angenommenen Teilchen und ihrer Sinkgeschwindigkeit kann über den zeitlichen Verlauf der Sedimentation auf die prozentuale Verteilung der Korngrößen geschlossen werden. Weitere Methoden zur Bestimmung der Teilchengröße sind die Mikroskopie, Elektronenmikroskopie, Siebanalyse, Sedimentationsanalyse, Bestimmung der Dichte der Oberfläche und dergleichen.

Unter dem Begriff "Polymerpartikel" werden im Rahmen der vorliegenden Erfindung dispergierte Partikel eines im wesentlichen wasserunlöslichen synthetischen organischen Polymeren, das in Gegenwart eines anorganischen oder organischen Füllstoffpartikels oder eines Gemischs aus zwei oder mehr solcher Füllstoffpartikel, wie oben beschrieben, polymerisiert wurde, verstanden. Die Polymerpartikel weisen vorzugsweise einen Durchmesser (d 50) von 0,03 bis 0,5 µm auf.

Als Füllstoffpartikel eignen sich im Rahmen der vorliegenden Erfindung alle organischen oder anorganischen Partikel, die eine Partikelgröße (gemäß der oben genannten Definition) von etwa 0,033 bis etwa 10 µm, beispielsweise etwa 0,05 bis etwa 5 µm, oder etwa 0,1 bis etwa 4 µm, oder 0,2 bis etwa 3µm, oder etwa 0,5 bis etwa 1,0 µm aufweisen. Zur Klassifizierung der Partikelgröße wird im Rahmen der vorliegenden Erfindung auf die Größe der Primärpartikel abgestellt.

Unter einem "Primärpartikel" wird im Rahmen der vorliegenden Erfindung ein Partikel verstanden, der aufgrund von primären ionischen oder kovalenten Kräften, beispielsweise in Form eines Kristallgitters, zusammengehalten wird. Im Unterschied zu den Primärpartikeln werden als "Sekundärpartikel" Agglomerate von zwei oder mehr Primärpartikeln verstanden, die aufgrund von schwachen ionischen oder anderen auf Polarität beruhenden Kräften an den Außenflächen oder Korngrenzen der Primärpartikel aneinander haften und unter geringem Energieaufwand, beispielsweise durch eine einfache mechanische Dispersion und/oder durch Zugabe eines Dispergiermittels, das die Aufspaltung der Partikel durch Beseitigung oder Verminderung der zwischen den Primärpartikeln bestehenden schwachen Bindungskräfte bewirkt.

Als Füllstoffpartikel eignen sich im Rahmen der vorliegenden Erfindung beispielsweise anorganische Stoffe, die gegenüber dem mindestens einen organischen Polymeren sowie während des Herstellungsprozesses der füllstoffhaltigen Polymerdispersion unter den dort herrschenden Reaktionsbedingungen inert sind. Beispiele für geeignete anorganische Materialien sind Aluminiumsilikate, beispielsweise Andalusit, Sillimanit, Kyanit, Mullit, Pyrophyllit oder Imogolit. Weiterhin geeignet sind Verbindungen auf der Basis von Natriumaluminium- oder Calciumsilikaten. Ebenfalls geeignet sind Mineralien wie Kieselerde, Quarzmehl, Kieselgel, Bariumsulfat, Metalloxide wie Zinkoxid, Titandioxid, Zeolithe, Kaophilit, Leucit, Kalifeldspat, Biotit, die Gruppe der Soro-, Cyclo-, Ino-, Phyllo- und Tectosilikate, die Gruppe der löslichen oder schwer löslichen Sulfate, wie Gips, Anhydrit oder Schwerspat, sowie Calciummineralien wie Talkum oder Kreide (CaCO₃). Die genannten anorganischen Materialien können im Rahmen der vorliegenden Erfindung einzeln, d. h. als einzige Art von Füllstoffpartikeln eingesetzt werden. Es ist jedoch ebensogut möglich, ein Gemisch aus zwei oder mehr der genannten Füllstoffpartikel einzusetzen.

Weiterhin sind als Füllstoffpartikel im Rahmen der vorliegenden Erfindung organische Füllstoffpartikel geeignet, in deren Gegenwart die Polymerisation der Polymerpartikel ablaufen kann. Geeignete organische Füllstoffpartikel sind beispielsweise Polyvinylacetat und Copolymere von Polyvinylacetat mit einem oder mehreren polymerisierbaren Verbindungen, Polystyrol, Polyethylen, Polypropylen, Wachse wie Polyethylenwachs, Polybutylen, Polybutadien, Copolymere von Butadien und Styrol, Polyacrylnitril, Harze wie Kolophoniumharz oder Kohlenwasserstoffharze, Polyacrylatester oder Polymethacrylatester mit linearen oder verzweigten aliphatischen, aromatischen oder cycloaliphatischen Alkoholen wie Methanol, Ethanol, Propanol, Isopropanol, den isomeren Butanolen und höheren Homologen der genannten Alkohole mit bis zu etwa 22 C-Atomen, Cyclohexanol, Benzylalkohol und dergleichen, Polydialkylmaleinate wie Dibutylmaleinat und deren Copolymere oder Silylgruppen-haltige Polymere wie Polyvinylsilane oder Copolymere von Vinylsilan mit einem oder mehreren der genannten Monomeren.

In eincr bevorzugten Ausführungsform der Erfindung enthalten die organischen Füllstoffpartikel als organischer Füllstoff Füllstoffpartikel Polyvinylacetat oder Copolymere von Polyvinylacetat mit einem oder mehreren polymerisierbaren Verbindungen, Polystyrol, Polyethylen, Polypropylen, Wachse, Polybutylen, Polybutadien, Copolymere von Butadien und Styrol, Polyacrylnitril, Harze, Polyacrylatester oder Polymethacrylatester oder Silylgruppen-haltige Polymere. In einer weiteren bevorzugten Ausführungsform bestehen die organischen Füllstoffpartikel aus den genannten Polymeren.

Im Rahmen einer bevorzugten Ausführungsform der Erfindung enthält die füllstoffhaltige Polymerdispersion weniger als fünf verschiedene Sorten von Füllstoffpartikeln, beispielsweise vier, drei oder zwei verschiedene Sorten. In einer weiteren Ausführungsform der vorliegenden Erfindung enthält die erfindungsgemäße Polymerdispersion nur eine Sorte von Füllstoffpartikeln.

Die im Rahmen der vorliegenden Erfindung einsetzbaren Füllstoffpartikel können glatte, rauhe oder poröse Oberflächen aufweisen. Im Rahmen einer bevorzugten Ausführungsform weisen Füllstoffpartikel eine rauhe oder eine poröse Oberfläche auf.

Im Rahmen einer bevorzugten Ausführungsform der Erfindung sind in der erfindungsgemäßen füllstoffhaltigen Polymerdispersion Partikel von Kreide (CaCO₃), Gips (CaSO₄) als Anhydrit, Halbhydrat oder Dihydrat, Quarzmehl, Kieselgel, Titandioxid, Quarzmehl, Talk, oder ein Schichtsilikat als Füllstoff enthalten.

In einer weiteren bevorzugten Ausführungsform der Erfindung enthält die erfindungsgemäße füllstoffhaltige Dispersion als Füllstoffpartikel Kreide (CaCO₃) oder Gips (CaSO₄) oder ein Gemisch von Füllstoffpartikeln enthaltend Kreide und Gips. In einer besonders bevorzugten Ausführungsform sind als Füllstoffpartikel Kreidepartikel enthalten.

Die füllstoffhaltige Polymerdispersion enthält Polymerpartikel bestehend aus einem organischen Polymeren oder einem Gemisch aus zwei oder mehr organischen Polymeren.

Als organische Polymere eignen sich alle organischen Polymeren, die durch radikalische Polymerisation olefinisch ungesättigter und radikalisch polymerisierbarer Monomere erhältlich sind.

Zur Herstellung der Polymerpartikel eignen sich insbesondere olefinisch ungesättigte Monomere, die einer Emulsionspolymerisation zugänglich sind. Geeignete Polymere sind beispielsweise Vinylester-Polymere, deren monomerer Grundbaustein ein Vinylester einer linearen oder verzweigten Carbonsäure mit etwa 2 bis etwa 10 C-Atomen darstellt.

Die Vinylester-Polymeren werden nicht nur als Homopolymere oder Copolymere von Vinylester-Monomeren eingesetzt, in einer weiteren bevorzugten Ausführungsform der Erfindung wird als organisches Polymeres ein Copolymeres von Vinylacetat und Ethylen (EVA-Copolymeres) eingesetzt.

Weitere geeignete organische Polymere entstammen der Gruppe der Styrol-Butadien-Kautschuke (SBR). Solche Kautschuke werden durch Copolymerisation von Styrol und Butadien hergestellt und enthalten die beiden Monomere in der Regel in einem Gewichtsverhältnis von etwa 23,5 zu 76,5 oder etwa 40 zu 60. Die SBR werden üblicherweise durch Emulsionspolymerisation in Wasser hergestellt.

Eine weitere geeignete Gruppe von Polymeren sind die Polyvinylacetate (PVAC). Die Polyvinylacetate stellen thermoplastische Polymere des Vinylacetats dar. Die Polymerisation erfolgt in der Regel durch Suspensions- oder Emulsionspolymerisation.

Eine weitere geeignete Gruppe von Polymeren stellen die Polyethylenhomo- und Copolymere dar. Eine radikalische Polymerisation von Ethylen wird beispielsweise im Rahmen der Hochdruckpolymerisation zu LDPE bei Drücken von etwa 1.400 bis 3.500 bar unter Temperaturen von 150 bis 350 °C durchgeführt. Die Reaktion wird dabei durch Sauerstoff oder Peroxide gestartet. Als Comonomere eignen sich lineare oder verzweigte α,β-ungesättigte Olefine.

Eine weitere Gruppe von geeigneten Polymeren stellen die Polyacrylsäureester oder die Polymethacrylsäureester oder die Copolymere aus Acrylsäureestern und Methacrylsäureestern davon. Gegebenenfalls können die genannten Polymere einen Gehalt an freier Säure aufweisen, der bis 20-25 ml 0,1 n KOH-Lösung entspricht.

Ein weiteres geeignetes Polymeres ist das Polyvinylidenchlorid. Das Polymere wird vorzugsweise durch Emulsionspolymerisation von 1,1-Dichlorethylen erhalten. Besonders geeignet sind Copolymere von 1,1-Dichlorethylen mit Acrylaten, Methacrylaten, Vinylchlorid oder Acrylnitril.

Ein weiteres geeignetes Polymeres ist das Polyvinylidenfluorid. Das Polymere läßt sich durch Polymerisation von Vinylidenfluorid erhalten und kann beispielsweise durch Copolymerisation mit geeigneten Monomeren wie Ethylen, Acrylnitril, Acrylatestern, Methacrylatestern und dergleichen in bezug auf chemische und mechanische Eigenschaften angepaßt werden.

Ebenfalls geeignet sind die Polyvinylchloride, wie sie im Rahmen der Suspensionspolymerisation (S-PVC) der Mikro-Suspensionspolymerisation oder der Emulsionspolymerisation (E-PVC) erhältlich sind.

Die genannten Polymeren können im Rahmen der vorliegenden Erfindung in der erfindungsgemäßen füllstoffhaltigen Polymerdispersion sowohl einzeln als auch im Gemisch aus zwei oder mehr davon, vorliegen.

In einer weiteren bevorzugten Ausführungsform der Erfindung enthält die füllstoffhaltige Polymerdispersion als Polymerpartikel Polyvinylacetat oder Polyacrylat, insbesondere Polybutylacrylat oder ein Gemisch aus Polyvinylacetat und Polyacrylat.

Je nach gewünschten Eigenschaften der Polymerpartikel und der Art der Herstellung kann der Anteil an Füllstoff an der gesamten Polymerdispersion zwischen etwa 5 und etwa 55 Gew.-% betragen. In einer bevorzugten Ausführungsform der Erfindung liegt der Anteil zwischen etwa 5 und etwa 50 Gew.-%, beispielsweise zwischen etwa 10 und etwa 35 Gew.-%. In weiteren bevorzugten Ausführungsformen kann der Gehalt an Füllstoffpartikeln bei etwa 15, 20, 25 oder 30 Gew.-% oder einem dazwischen liegenden Wert liegen.

Gegebenenfalls kann die erfindungsgemäße füllstoffhaltige Polymerdispersion noch mindestens ein wasserlösliches organisches Polymeres mit einem Molekulargewicht von mehr als etwa 600 und einem HLB-Wert von mindestens 15, beispielsweise mehr als etwa 16 oder mehr als etwa 17 oder mehr als etwa 18, enthalten. Dies ist insbesondere dann bevorzugt, wenn als Füllstoffpartikel zumindest teilweise anorganische Füllstoffpartikel in der erfindungsgemäßen Polymerdispersion vorliegen.

Eine als wasserlösliches organisches Polymeres geeignete Verbindung ist beispielsweise Polyvinylalkohol, der bis zu etwa 99 %, beispielsweise zu etwa 70 bis etwa 95 % oder etwa 80 bis etwa 88 %, hydrolysiert sein kann, wobei die Essigsäuregruppen der Kette durch OH-Gruppen ersetzt sind, die vorzugsweise statistisch über die gesamte Polymerkette verteilt sind.

Der Polyvinylalkohol weist vorzugsweise einen Polymerisationsgrad von mehr als 100, insbesondere von mehr als etwa 2 000 auf. Besonders gute Ergebnisse lassen sich beispielsweise mit Polyvinylalkohol mit einem Polymerisationsgrad von etwa 1 000 bis etwa 2 000 erzielen.

Der Polyvinylalkohol weist vorzugsweise einen HLB-Wert von mindestens etwa 19 oder mindestens etwa 20 auf, beispielsweise etwa 21 bis etwa 26, z. B. etwa 22 bis etwa 24.

Geeignete Polyvinylalkohole sind beispielsweise unter der Bezeichnung Mowiwol 40/88, Mowiwol 26/88, Mowiwol 8/88 oder Mowiwol 4/88 von der Fa. Clariant erhältlich.

Weitere im Rahmen der vorliegenden Erfindung liegende wasserlösliche organische Polymere bestehen beispielsweise aus den Celluloseethern, Carboxymethylcellulosen, Hydroxyethylcellulosen, Casein, Natrium- oder Kaliumalginaten, Polyurethanen usw.

In einer weiteren Ausführungsform der Erfindung beträgt das Verhältnis der mittleren spezifischen Oberfläche von organischem Polymeren zu organischen oder anorganischen Füllstoffpartikeln etwa 5:1. Die den anorganischen Füllstoffen entsprechende spezifische Gesamtoberfläche beträgt, bezogen auf die organischen wasserlöslichen Polymeren, bei der erfindungsgemäßen Dispersion etwa 5 % bis etwa 35 % der Gesamtoberfläche der Dispersion.

In einer weiteren Ausführungsform der Erfindung erhöhen die Füllstoffe die mittlere spezifische Gesamtoberfläche der Dispersion.

In einer weiteren bevorzugten Ausführungsform der Erfindung enthält die füllstoffhaltige Polymerdispersion mindestens ein ionisches Tensid mit einem HLB-Wert von 1 bis 10. In einer bevorzugten Ausführungsform der Erfindung weist das ionische Tensid ein Molekulargewicht von weniger als etwa 600 auf.

Es können hierbei anionische, kationische oder ampholytische Tenside, oder Gemische aus zwei oder mehr davon, enthalten sein. Beispiele für geeignete anionische Tenside sind Alkylsulfate, insbesondere solche mit einer Kettenlänge von etwa 8 bis etwa 18 C-Atomen, Alkyl- und Alkarylethersulfate mit etwa 8 bis etwa 18 C-Atomen im hydrophoben Rest und 1 bis etwa 10 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 C-Atomen, Alkylarylsulfonate mit etwa 8 bis etwa 18 C-Atomen, Tauride, Ester und Halbester der Sulfobernsteinsäure mit einwertigen Alkoholen oder Alkylphenolen mit 4 bis etwa 15 C-Atomen, die gegebenenfalls mit 1 bis etwa 20 EO-Einheiten ethoxyliert sein können, Alkali- und Ammoniumsalze von Carbonsäuren, beispielsweise von Fettsäuren oder Harzsäuren mit etwa 8 bis etwa 32 C-Atomen oder deren Gemischen, Phosphorsäurepartialester und deren Alkali- und Ammoniumsalze.

In einer bevorzugten Ausführungsform der Erfindung werden als anionische Tenside Alkyl- oder Alkarylphosphate oder Alkyl- oder Alkarylsulfate mit etwa 8 bis etwa 22 C-Atomen im organischen Rest, Alkylether- oder Alkaryletherphosphate oder Alkyletheroder Alkarylethersulfate mit etwa 8 bis etwa 22 C-Atomen im Alkyl- bzw. Alkarylrest und 1 bis etwa 10 EO-Einheiten, oder ein Gemisch aus zwei oder mehr davon, eingesetzt.

Im Rahmen einer weiteren bevorzugten Ausführungsform wird als anionisches Tensid ein Alkyl- oder Alkarylsulfate mit etwa 8 bis etwa 22 C-Atomen im organischen Rest oder ein Alkylether- oder Alkarylethersulfat mit etwa 8 bis etwa 22 C-Atomen im Alkyl- bzw. Alkarylrest und 1 bis etwa 10 EO-Einheiten, oder ein Gemisch aus zwei oder mehr davon, eingesetzt.

Beispiele für kationische Tenside sind Salze von primären, sekundären oder tertiären Fettaminen mit etwa 8 bis etwa 24 C-Atomen mit Essigsäure, Schwefelsäure, Salzsäure oder Phosphorsäuren, quaternäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder Gemische aus zwei oder mehr davon.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniurnsalze mit einem C₈₋₁₈-Acylrest oder Alkylimidazoliumbetaine.

In einer bevorzugten Ausführungsform der vorliegenden Erfindung werden die folgenden anionischen Tenside eingesetzt: die Alkalisalze, insbesondere das Na-Salz der C_{12/14}-Fettalkoholethersulfate, Alkylphenolethersulfate, insbesondere deren Alkali- oder NH₄-Salze, Na-n-Dodecylsulfat, Di-K-Ölsäuresulfonat (C₁₈), Na-n-alkyl-(C₁₀C₁₃)-benzolsulfonat, Na-2-Ethylhexylsulfat, NH₄-Laurylsulfat (C_{8/14}), Na-Laurylsulfat (C_{12/14}), Na-Laurylsulfat (C_{12/16}), Na-Laurylsulfat (C_{12/18}), Na-Cetylstearylsulfat (C_{16/18}), Na-Oleylcetylsulfat (C_{16/18}), Sulfobernsteinsäuremonoester-di-Na-Salz, Fettalkoholsulfosuccinat-di-Na-Salz, Dialkylsulfosuccinat-Na-Salz oder Di-Na-Sulfosuccinamat oder Gemische aus zwei oder mehr davon.

Wenn die erfindungsgemäße Polymerdispersion ionische Tenside enthält, so sind sie in einer bevorzugten Ausführungsform der Erfindung in einer Menge von bis zu etwa 1 Gew.-% oder weniger, beispielsweise bis zu etwa 0,8 Gew.-% oder etwa 0,5 Gew.-%, oder weniger, bezogen auf die gesamte Dispersion, enthalten. Gegebenenfalls können auch geringere Mengen an ionischem Tensid enthalten sein, beispielsweise bis zu etwa 0,2 Gew.-% oder darunter, beispielsweise etwa 0,1 Gew.-%, 0,05 Gew.-% oder 0,02 Gew.-%.

In einer weiteren bevorzugten Ausführungsform beträgt das Verhältnis von ionischem Tensid zu organischem wasserlöslichem Polymerem etwa 0,1 % bis etwa 3,0 %.

In einer weiteren bevorzugten Ausführungsform enthält die füllstoffhaltige Polymerdispersion mindestens ein nichtionisches Tensid mit einem HLB-Wert von 13 bis 20. In einer bevorzugten Ausfuhrungsform der Erfindung weist das nichtionische Tensid ein Molekulargewicht von weniger als etwa 600 auf.

Beispiele für nichtionische Tenside sind Alkylpolyglykolether, vorzugsweise solche mit etwa 8 bis etwa 20 EO-Einheiten und Alkylresten mit etwa 8 bis etwa 20 C-Atomen, Alkylarylpolyglykolether, vorzugsweise solche mit etwa 8 bis etwa 40 EO-Einheiten und etwa 8 bis etwa 20 C-Atomen in den Alkyl- oder Arylresten, Ethylenoxid/Propylenoxid (EO/PO)-Blockcopolymere, vorzugsweise solche mit etwa 8 bis etwa 40 EO- bzw. PO-Einheiten, Additionsprodukte von Alkylaminen mit Alkylresten von etwa 8 bis etwa 22 C-Atomen mit Ethylenoxid oder Propylenoxid, Fett- und Harzsäuren mit etwa 6 bis etwa 32 C-Atomen, Alkylpolyglykoside mit linearen oder verzweigten, gesättigten oder ungesättigten Alkylresten mit im Mittel etwa 8 bis etwa 24 C-Atomen und einem Oligoglykosidrest mit etwa 1 bis etwa 10 Hexose- oder Pentoseeinheiten im Mittel oder Gemische aus zwei oder mehr davon, Naturstoffe und deren Derivate wie Lecithin, Lanolin oder Sarkosin, polare Gruppen enthaltende lineare Organo(poly)siloxane, insbesondere solche mit Alkoxygruppen mit bis zu etwa 10 C-Atomen und bis zu etwa 20 EO- oder PO-Gruppen.

In einer bevorzugten Ausführungsform der Erfindung enthält die erfindungsgemäße Polymerdispersion als nichtionisches Tensid beispielsweise Nonylphenolethoxylate, Octylphenolethoxylate, C_{12/14}-Fettalkoholethoxylate, Oleylcetylethoxylate, C_{16/18}-Fettalkoholethoxylate, Cetylstearylethoxylate, ethoxylierte Triglyceride, Sorbitanmonolaurat, Sorbitanmonooleat, Sorbitan-20EO-monooleat, Sorbitan-20EO-monostearat oder ein Gemisch aus zwei oder mehr davon.

Wenn die erfindungsgemäße Polymerdispersion nichtionische Tenside enthält, so sind sie in einer bevorzugten Ausführungsform der Erfindung in einer Menge von bis zu etwa 1 Gew.-% oder weniger, beispielsweise bis zu etwa 0,8 Gew.-% oder etwa 0,5 Gew.-%, oder weniger, bezogen auf die gesamte Dispersion, enthalten. Gegebenenfalls können auch geringere Mengen an nichtionischem Tensid enthalten sei, beispielsweise bis zu etwa 0,2 Gew.-% oder darunter, beispielsweise etwa 0,1 Gew.-%, 0,05 Gew.-% oder 0,02 Gew.-%. In einer weiteren bevorzugten Ausführungsform beträgt das Verhältnis von nichtionischem Tensid oder nichtionischen Tensiden zu organische wasserlöslichen Polymeren (bezogen auf das Gewicht) etwa 0,01 bis etwa 1,0%. Das Verhältnis von nichtionischem Tensid oder nichtionischen Tensiden zu anionischem Tensid oder anionischen Tensiden (bezogen auf das Gewicht) beträgt in einer bevorzugten Ausführungsform der Erfindung etwa 5:1 bis etwa 1:5, beispielsweise etwa 3:1 bis etwa 1:3 oder etwa 2:1 bis etwa 1.2. In einer bevorzugten Ausführungsform der Erfindung liegt das Gewichtsverhältnis von nichtionischem Tensid zu anionischem Tensid bei etwa 1,2:1 bis etwa 1:1,2 oder bei etwa 1:1.

In einer weiteren bevorzugten Ausführungsform der Erfindung enthält die Dispersion bis zu etwa 30 Gew.-%, bezogen auf die gesamte Dispersion, an Zusatzstoffen. Zu den Zusatzstoffen zählen beispielsweise Stabilisatoren, Entschäumer, Antioxidantien, Photostabilisatoren, Pigmentverteiler, Füllstoffe, pH-Regler, Weichmacher und dergleichen.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester, sowie Gemische aus zwei oder mehr davon. Besonders geeignet sind die asymmetrischen. Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Die erfindungsgemäße Dispersion kann, wenn eine Verwendung als Klebstoff vorgesehen ist, bis zu etwa 10 Gew.-% an üblichen Tackifiem enthalten. Als Tackifier geeignet sind beispielsweise Harze, Terpen-Oligomere, Cumaron-/Inden-Harze, aliphatische, petrochemische Harze und modifizierte Phenolharze.

Die erfindungsgemäße Dispersion kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS).

In einer weiteren bevorzugten Ausführungsform der Erfindung weist die füllstoffhaltige Polymerdispersion etwa
- 10 bis 70 Gew.-% eines nicht wasserlöslichen organischen Polymeren in Form von Polymerpartikeln,
- 5 bis 55 Gew.-% Füllstoffpartikel,
- 0,05 bis 0,5 Gew.-% eines nichtionischen Tensids mit einem HLB-Wert von 13 bis 20,
- 0,01 bis 0,1 Gew.-% eines ionischen Tensids mit einem HLB-Wert von 1 bis 10,
- 0,05 bis 10 Gew.-% eines wasserlöslichen organischen Polymeren mit einem Molekulargewicht von mehr als 600 und einem HLB-Wert von mehr als 15, sofern anorganische Füllstoffpartikel in der Polymerdispersion vorliegen,
- 24,89 bis 84,89 Gew.-% Wasser und
- 0 bis 30 Gew.-% weitere Zusatzstoffe
auf.

Wenn die erfindungsgemäße Polymerdispersion ausschließlich organische Füllstoffpartikel aufweist, kann trotzdem ein wasserlösliches organisches Polymeres mit einem Molekulargewicht von mehr als 600 und einem HLB-Wert von mehr als 15 zusammen mit den entsprechenden weiteren Verbindungen in der Dispersion vorliegen. Es ist bei ausschließlich organischen Füllstoffen jedoch zur Erzielung des erfindungsgemäßen Effekts nicht unbedingt notwendig ein wasserlösliches organisches Polymeres einzusetzen. Sofern ein wasserlösliches organisches Polymeres mit einem Molekulargewicht von mehr als 600 und einem HLB-Wert von mehr als 15 zusammen mit einem organischen Füllstoff oder einem Gemisch aus zwei oder mehr organischen Füllstoffen eingesetzt werden soll, so kann die eingesetzte Menge an wasserlöslichem organischem Polymeren mit einem Molekulargewicht von mehr als 600 und einem HLB-Wert von mehr als 15 in der Regel geringer sein als bei einer vergleichbaren Menge an anorganischem Füllstoff.

In einer bevorzugten Ausführungsform der vorliegenden Erfindung wird die füllstoffhaltige Polymerdispersion durch Emulsionspolymerisation hergestellt. Unter Emulsionspolymerisation" wird im Rahmen der vorliegenden Erfindung ein Verfahren zur Polymerisation verstanden, bei dem in Wasser unlösliche oder schlecht lösliche Monomere mit Hilfe von Emulgatoren in Wasser emulgiert und unter Verwendung wasserlöslicher Initiatoren polymerisiert werden. Geeignete Verfahren zur Emulsionspolymerisation werden beispielsweise in "Comprehensive Polymer Chemistry", **4**, 171-218, Elias (5. Auflage), 2, 93ff. Encyclopaedia of Polymer Science and Engineering, **12**, 512ff. oder Encyclopaedia of Polymer Science and Technology, **5**, 801ff. beschrieben. Weitere geeignete Referenzen sind beispielsweise aus den dem Fachmann bekannten lexikalischen Nachschlagewerken Ullmann's Enzyklopädie der technischen Chemie, Houben-Weyl (**E20**, 218-268) oder Kirk-Othmer bekannt. Auf die genannten Literaturstellen wird hiermit ausdrücklich Bezug genommen und die Offenbarung der genannten Stellen wird als Bestandteil der Offenbarung des vorliegenden Textes betrachtet.

Während die aus dem Stand der Technik bekannten füllstoffhaltigen Polymerdispersionen in der Regel eine Zugabe des Füllstoffs zu der bereits fertigen Polymerdispersion beinhalten, liegen die Füllstoffpartikel beim erfindungsgemäßen Verfahren bereits vor Beginn der Polymerisation der Monomeren in einer Dispersion in Form ihrer Primärpartikel vor.

In einer bevorzugten Ausführungsform der vorliegenden Erfindung wird die Dispersion der Füllstoffpartikel so durchgeführt, daß gegebenenfalls vorliegende Agglomerate von Füllstoffpartikeln wenigstens weitgehend, d. h., zu wenigstens etwa 80 oder 90 Gew.-%, in ihre Primärpartikel aufgetrennt werden. In der Regel wird diese Aufspaltung in die Primärpartikel durch das Vorliegen von Emulgatoren bzw. Dispergatoren wie sie in der Emulsions- bzw. Suspensionspolymerisation eingesetzt werden, begünstigt. Es ist jedoch auch jede andere Form von Zerlegung eventueller Füllstoffpartikel-Agglomerate in die Primärpartikel im Rahmen des erfindungsgemäßen Verfahrens möglich. Hierzu zählt beispielsweise die Zerteilung von Agglomeraten mittels Ultraschall, einem Flotationsverfahren oder elektrokinetischen Vorgängen.

Die füllstoffhaltige Polymerdispersion wird im Rahmen der vorliegenden Erfindung durch Emulsionspolymerisation hergestellt. Zu diesem Zweck wird vorzugsweise zunächst eine Dispersion der Füllstoffpartikel in Wasser erzeugt.

Dabei wird beispielsweise zunächst eine wäßrige Lösung eines ionischen Tensids hergestellt, wobei als ionisches Tensid vorzugsweise dasjenige Tensid eingesetzt wird, das im Anschluß auch bei der Emulsionspolymerisation Verwendung findet.

In einer weiteren bevorzugten Ausführungsform der Erfindung wird zunächst eine wäßrige Lösung eines organischen wasserlöslichen Polymeren mit einem Molekulargewicht von mindestens etwa 600 und einem HLB-Wert von mindestens etwa 15 hergestellt.

In einer weiteren bevorzugten Ausführungsform der Erfindung kann auch zunächst eine wäßrige Lösung hergestellt werden, die sowohl ein ionisches Tensid als auch ein wasserlösliches Polymeres mit einem Molekulargewicht von mindestens etwa 600 und einem HLB-Wert von mindestens etwa 15 aufweist.

Im Anschluß an die Herstellung der genannten Lösungen wird im Rahmen einer bevorzugten Ausrührungsform der vorliegenden Erfindung die Dispersion der Füllstoffpartikel erzeugt. Hierzu werden die Füllstoffpartikel in einer der oben genannten Lösungen dispergiert, wobei die Dispersion wird so lange gerührt wird, bis eine möglichst weitgehende Verteilung gegebenenfalls vorliegender Füllstoffagglomerate erzielt wurde. In Zweifelsfallen, beispielsweise beim Einsatz eines neuen Füllstoffs zu dem noch keine experimentelle Erfahrung vorliegt, läßt sich die Dispersion der Füllstoffpartikel und die Verteilung eventuell vorliegender Agglomerate einfach durch mehrere aufeinanderfolgende Messungen der Größenverteilung während der Dispersion verfolgen. Eine Zerteilung in die Primärpartikel liegt dann vor, wenn sich die Partikelgrößenverteilung in zwei aufeinanderfolgenden Messungen nicht mehr oder nur noch geringfügig ändert. Gegebenenfalls kann die Zerteilung der Agglomerate durch Beeinflussung der Temperatur, der Rührgeschwindigkeit oder den eingesetzten Emulgator oder ein Gemisch aus zwei oder mehr Emulgatoren beeinflußt werden. Die Effekte der vorgeschlagenen Maßnahmen lassen sich auf einfachste Weise durch die Messung der Partikelgrößenverteilung kontrollieren und für den Einzelfall optimieren.

Wenn eine geeignete Dispersion von Füllstoffpartikeln vorliegt, so wird anschließend mit der Emulsionspolymerisation fortgefahren. Hierzu wird beispielsweise ein Polymerisationsinitiator in der Dispersion gelöst, die Dispersion auf eine geeignete Temperatur gebracht und die Polymerisationsreaktion durch Zutropfen von Monomerem in Gang gebracht. Anstelle dieser Vorgehensweise ist jedoch auch jede andere Vorgehensweise geeignet, mit deren Hilfe sich die Emulsionspolymerisation in der Füllstoffpartikeldispersion durchführen läßt.

In einer weiteren bevorzugten Ausfüllrungsform der Erfindung kann auch eine die Monomeren oder das Monomerengemisch und die Füllstoffdispersion enthaltende Voremulsion nach dem oben beschriebenen Verfahren hergestellt werden. Diese Voremulsion, die gegebenenfalls einen Polymerisationsinitiatoren enthält, kann tropfenweise oder portionsweise bei einer für die Polymerisationsreaktion geeigneten Temperatur hinzugefügt werden.

Gegenstand der vorliegenden Erfindung ist demnach auch ein Verfahren zur Herstellung einer füllstoffhaltigen Polymerdispersion, bei dem mindestens ein radikalisch polymerisierbares Monomeres unter Verwendung eines Polymerisationsinitiators einer Emulsionspolymerisation in wäßriger Phase unterworfen wird, wobei die wäßrige Phase Füllstoffpartikel mindestens eines dispergierten Füllstoffs mit einer Partikelgröße (d50) von 0,01 bis 0,5 µm, mindestens ein wasserlösliches organisches Polymeres mit einem Molekulargewicht von mehr als 600 und einem HLB-Wert von mehr als 15 und mindestens ein ionisches Tensid enthält. Geeignete ionische Tenside sind diejenigen, die bereits im Rahmen des vorliegenden Textes aufgezählt wurden.

In einer bevorzugten Ausführungsform der Erfindung enthält die wäßrige Phase zusätzlich ein nichtionisches Tensid, wobei geeignete nichtionische Tenside bereits im Rahmen des vorliegenden Textes beschrieben wurden.

In einer weiteren bevorzugten Ausführungsform der Erfindung wird im Rahmen des Verfahrens zur Herstellung der erfindungsgemäßen Polymerdispersion ein wasserlöslicher Polymerisationsinitiator verwendet, insbesondere Peroxoverbindungen organischer oder anorganischer Säuren.

Als Polymerisationsinitiatoren geeignet sind wasserlösliche Initiatoren wie tert.-Butylhydroperoxid, Natriumperoxodisulfat, Peroxodischwefelsäure, Cumolhydroperoxid, Wasserstoffperoxid, Natrium- oder Kaliumpercarbonat; Azoverbindugen wie Diazoisobuttersäuredinitril oder Benzoylperoxid. Ebenfalls geeignet sind Redoxinitiatoren, d. h., Systeme die aus Oxidations- und Reduktionsmitteln bestehen. Wasserlösliche Redoxinitiatoren enthalten in vielen Fällen Übergangsmetalle, z. B. Fe/HO (I), es können jedoch auch andere Basiskomponenten enthalten sein, z. B. die Systeme Peroxisulfate/Metabisulfate, Peroxisulfate/Thiosulfate oder Peroxide/Thiosulfate.

Im Rahmen einer bevorzugten Ausführungsform der Erfindung werden als Polymerisationsinitiatoren Natriumpersulfat, Kaliumpersulfat oder Ammoniumpersulfat eingesetzt.

Die Menge an eingesetztem Polymerisationsinitiator liegt im Rahmen der vorliegenden Erfindung in der Regel bei etwa 0,01 bis etwa 0,5 Gew.-%, bezogen auf die gesamte Dispersion. In einer bevorzugten Ausführungsform der Erfindung liegt die gesamte eingesetzte Menge an Polymerisationsinitiator bei etwa 0,03 bis etwa 0,2 Gew.-%, beispielsweise bei etwa 0,05 bis etwa 0,15 Gew.-%.

Die Gesamtmenge des Polymerisationsinitiators kann im Rahmen der vorliegenden Erfindung bereits zu Beginn der Polymerisation in der Dispersion der Füllstoffpartikel vorliegen. In einer bevorzugten Ausführungsform der Erfindung wird der Polymerisationsinitiator jedoch in mindestens zwei Chargen zu unterschiedlichen Zeitpunkten der Polymerisationsreaktion zugegeben. So kann z. B. die Zugabe eines Teils der gesamten Menge des Polymerisationsinitiators vor der Monomerzugabe erfolgen, während die Zugabe der verbleibenden Restmenge portionsweise oder kontinuierlich während der Monomerzugabe, oder nach Beendigung der Monomerzugabe erfolgen kann.

Das erfindungsgemäße Verfahren wird in einer bevorzugten Ausführungsform der Erfindung in mindestens zwei aufeinanderfolgenden Stufen durchgeführt, wobei in einer ersten Stufe eine Dispersion enthaltend
a) mindestens ein ionisches Tensid mit einem HLB-Wert von 1 bis 10 oder ein nichtionisches Tensid mit einem HLB-Wert von 13 bis 20 oder ein Gemisch aus zwei oder mehr davon,
b) mindestens einen anorganischen Füllstoff mit einer Partikelgröße (d50) von 0,01 bis 0,5 µm,
c) mindestens einen Polymerisationsinitiator und
d) mindestens ein wasserlösliches organisches Polymeres mit einem Molekulargewicht von mehr als 200 und einem HLB-Wert von mehr als 15
hergestellt wird, die Dispersion auf eine Temperatur von 70 bis 90 °C gebracht und anschließend in einer zweiten Stufe
e) mindestens ein radikalisch polymerisierbares Monomeres
zugegeben und polymerisiert wird.

In einer weiteren bevorzugten Ausfüklrungsform der Erfindung erfolgt die Zugabe der organischen oder anorganischen Füllstoffpartikel oder von deren Gemisch vor der Zugabe des Polymerisationsinitiators.

In einer weiteren bevorzugten Ausführungsform des erfindungsgemäßen Verfahrens liegen der organische oder der anorganische Füllstoff oder deren Gemisch vor der Polymerisation im wesentlichen in Form ihrer Primärpartikel vor.

Die im Rahmen des erfindungsgemäßen Verfahrens angewandte Polymerisationstemperatur hängt von der Wahl der eingesetzten Monomeren und dem angewandten Polymerisationsverfahren ab. Für die im Rahmen der vorliegenden Erfindung eingesetzten Monomeren aus der Gruppe der Acrylate und Vinylacetat beträgt die Polymerisationstemperatur in einer bevorzugten Ausführungsform der Erfindung etwa 80 bis 90 °C.

Ein weiterer Gegenstand der Erfindung ist die Verwendung der erfindungsgemäßen füllstoffhaltigen Polymerdispersionen in Lacken, Dispersionsfarben, Leimen, Klebstoffen, Oberflächenbeschichtungsmitteln oder sonstigen Oberflächenbeschichtungen.

Gegenstand der Erfindung ist demnach auch ein Klebstoff oder ein Oberflächenbeschichtungsmittel, enthaltend eine erfindungsgemäße oder eine nach einem erfindungsgemäßen Verfahren hergestellte, füllstoffhaltige Polymerdispersion.

Die Erfindung wird nachfolgend durch Beispiele näher erläutert:

### Beispiele:

Beispielhafte Herstellung einer füllstoffhaltigen Polyvinylacetatdispersion:
1.1 In einen Monomerbehälter wurden 200 Gramm Vinylacetatmonomeres gefüllt.
1.2 Herstellung der Katalysatorlösung
In einem sauberen Plastikbehälter wurden 1,0 Gramm Ammoniumpersulfat in 3,0 Gramm Wasser aufgelöst.
1.3 Herstellung einer Vormischung
In einen sauberen Behälter wurden 592,3 Gramm Wasser und 32,7 Gramm Vinol V-205 (Hersteller: Air Products, Kentucky) gefüllt. Die Mischung wurde gerührt und anschließend auf etwa 85 bis 90 °C erhitzt. Es wurde bis zur vollständigen Auflösung der Komponenten etwa 2 Stunden gerührt. Anschließend wurde abgekühlt.
1.4 Es wurden 0,37 Gramm Natriumlaurylethersulfat und 0,12 Gramm Tergitol 15S9 (Hersteller: Union Carbide Chemicals and Elastics (Europe) S.A.) zugegeben. Die Mischung wurde einige Minuten homogenisiert und anschließend mit 100 Gramm Kreide versetzt. Hierbei wurde etwa 30 Minuten lang gerührt, um die Spaltung der Kreide in ihre Primärpartikel zu erreichen.
1.5 Zu dieser Dispersion wurden 0,09 Gramm Entschäumer gegeben.
1.6 Polymerisation:
Die Vormischung wurde nun auf 80 °C aufgeheizt und 90 % der Katalysatorlösung wurden zugegeben. Das Gemisch wurde für 5Minuten durch Rühren homogenisiert.
1.7 Anschließend wurde das Vinylacetatmonomere zugegeben und mit dem Polymerisationsverfahren begonnen, das etwa 3,5 bis 4,0 Stunden dauerte.
1.8 Nach der Erlangung des Endproduktes wurden die physikalisch-chemischen Parameter sowie die Endanwendung untersucht.
2. Restmonomergehalt:
Eine erfindungsgemäße Dispersion wurde mit einer Dispersion verglichen, die lediglich durch Mischen einer Polyvinylacetatdispersion mit Kreide erhalten wurde. Beide Dispersionen waren ansonsten in ihrer Zusammensetzung identisch. Beide Dispersionen wurden gaschromatografisch auf monomeres Vinylacetat untersucht. Die Untersuchungen wurden sowohl durch Extraktion als auch nach dem "Headspace-Verfahren" durchgeführt. Die Ergebnisse lassen sich aus Tabelle 1 entnehmen.

**Tabelle 1:**

| Gehalt an Vinylacetat | | |
|---|---|---|
| Muster | Headspace | Extraktion |
| Vergleichsbeispiel | 551 ppm | 872 |
| Erfindungsgemäß | 28 | 27 |

### 3. Beispielrezepturen

In der folgenden Tabelle 2 sind einige Beispielrezepturen angegeben. Die angegebenen Mengen beziehen sich auf Gewichtseinheiten.

**Tabelle 2**

| Bestandteil | Beispiel 1 | Beispiel 2 | Beispiel 3 |
|---|---|---|---|
| Wasser | 450 | 450 | 582 |
| SK1 | - | - | 14 |
| SK2 | 23,5 | 23,5 | 36 |
| SK3 | 23,5 | 23,5 | - |
| Nichtionisches Tensid | 0,4 | 0,4 | 0,4 |
| Anionisches Tensid | 0,4 | 0,4 | 0,4 |
| Entschäumer | 0,2 | 0,2 | 0,2 |
| Titandioxid | - | - | 90 |
| Kreide | 110 | 165 | - |
| Vinylacetat | 390 | 335 | 260 |
| Ammoniumpersulfat | 1,3 | 1,3 | 1,3 |
| Total | 999,3 | 999,3 | 984,3 |
| Feststoffgehalt | 55,33 % | 55,84 % | 41,32 |
| pH-Wert | 6,5 | 6,65 | - |
| Viskosität (5/2/20) cps | 38.000 | 38.000 | 83.000 |
| SK1 = Polyvinylalkohol, teilverseift, Hydrolysegrad 87,2 - 88,8 %, Acetylgehalt 10-11,4 %, Polymerisationsgrad 900, Viskosität 3,5-4,5 mPas (4% ige Lösung in Wasser) | | | |
| SK2 = Polyvinylalkohol, teilverseift, Hydrolysegrad 86,7 - 88,7 %, Acetylgehalt 10-11,4 %, Ester-Zahl 130 - 150, pH-Wert = 4,5 - 7 (4% ige Lösung in Wasser), Viskosität 24,5 - 27,5 mPas (4% ige Lösung in Wasser) | | | |
| SK3 = Polyvinylalkohol, teilverseift, Hydrolysegrad 87,2 - 88,8 %, Acetylgehalt 10-11,4 %, Polymerisationsgrad 900, Viskosität 3,5-4,5 mPas (4% ige Lösung in Wasser) | | | |
| Nichtionisches Tensid = C11 - 15 Alkohol + 9 EO | | | |
| Anionisches Tensid = C12 - 14 Fettalkohol + 2 EO-Sulfat-Natriumsalz | | | |
| Entschäumer = Gemisch aus Kohlenwasserstoffen und nichtionischen Tensiden | | | |

## Patentansprüche

1. Füllstoffhaltige Polymerdispersion, die Wasser, Partikel mindestens eines organischen oder mindestens eines anorganischen Füllstoffs oder deren Gemisch (Füllstoffpartikel), und Partikel mindestens eines synthetischen organischen Polymeren, das in Gegenwart mindestens einer Sorte von Füllstoffpartikeln polymerisiert wurde (Polymerpartikel) enthält, **dadurch gekennzeichnet, daß** das Verhältnis der Teilchengröße der Füllstoffpartikel zur Teilchengröße der Polymerpartikel 1,1:1 bis 20:1 beträgt.

2. Füllstoffhaltige Polymerdispersion nach Anspruch 1, **dadurch gekennzeichnet, daß** die Polymerpartikel einen Durchmesser (d50) von 0,03 bis 0,5 µm aufweisen.

3. Füllstoffhaltige Polymerdispersion nach Anspruch 1 oder 2, **dadurch gekennzeichnet, daß** als anorganischer Füllstoff Kreide (CaCO₃), Gips (CaSO₄) als Anhydrit, Halbhydrat oder Dihydrat, Quarzmehl, Kieselgel, Titandioxid, Talk, Schichtsilikat, Bariumsulfat oder Baryt enthalten ist und daß als organischer Füllstoff Füllstoffpartikel enthaltend Polyvinylacetat oder Copolymere von Polyvinylacetat mit einem oder mehreren polymerisierbaren Verbindungen, Polystyrol, Polyethylen, Polypropylen, Wachse, Polybutylen, Polybutadien, Copolymere von Butadien und Styrol, Polyacrylnitril, Harze, Polyacrylatester oder Polymethacrylatester oder Silylgruppen-haltige Polymere enthalten sind.

4. Füllstoffhaltige Polymerdispersion nach einem der Ansprüche 1 bis 3, **dadurch gekennzeichnet, daß** mindestens ein wasserlösliches organisches Polymeres mit einem Molekulargewicht von mehr als 600 und einem HLB-Wert von mindestens 15 enthalten ist.

5. Füllstoffhaltige Polymerdispersion nach einem der Ansprüche 1 bis 4, **dadurch gekennzeichnet, daß** mindestens ein ionisches Tensid mit einem HLB-Wert von 1 bis 10 enthalten ist.

6. Füllstoffhaltige Polymerdispersion nach einem der Ansprüche 1 bis 5, **dadurch gekennzeichnet, daß** mindestens ein nichtionisches Tensid mit einem HLB-Wert von 13 bis 20 enthalten ist.

7. Füllstoffhaltige Polymerdispersion nach einem der Ansprüche 1 bis 6, **dadurch gekennzeichnet, daß** sie
- 10 bis 70 Gew.-% eines nicht wasserlöslichen organischen
Polymeren,
- 5 bis 55 Gew.-% Füllstoffpartikel,
- 0,05 bis 0,5 Gew.-% eines nichtionischen Tensids mit einem
HLB-Wert von 13 bis 20,
- 0,01 bis 0,1 Gew.-% eines ionischen Tensids mit einem HLB-Wert von 1 bis 10,
- 0,05 bis 10 Gew.-% eines wasserlöslichen organischen Polymeren mit einem Molekulargewicht von mehr als 600 und einem HLB-Wert von mehr als 15,
- 24,89 bis 84,89 Gew.-% Wasser und
- 0 bis 30 Gew.-% weitere Zusatzstoffe enthält.

8. Verfahren zur Herstellung einer füllstoffhaltigen Polymerdispersion, **dadurch gekennzeichnet, daß** mindestens ein radikalisch polymerisierbares Monomeres unter Verwendung eines Polymerisationsinitiators einer Emulsionspolymerisation in wäßriger Phase unterworfen wird, wobei die wäßrige Phase Füllstoffpartikel mindestens eines dispergierten Füllstoffs mit einer Partikelgröße (d50) von 0,01 bis 0,5 µm, mindestens ein wasserlösliches organisches Polymeres mit einem Molekulargewicht von mehr als 600 und einem HLB-Wert von mehr als 15 enthält.

9. Verfahren nach Anspruch 8, **dadurch gekennzeichnet, daß** die wäßrige Phase ein ionisches Tensid enthält.

10. Verfahren nach Anspruch 8 oder 9, **dadurch gekennzeichnet, daß** die wäßrige Phase ein nichtionisches Tensid enthält.

11. Verfahren nach einem der Ansprüche 8 bis 10, **dadurch gekennzeichnet, daß** ein wasserlöslicher Polymerisationsinitiator verwendet wird.

12. Verfahren nach einem der Ansprüche 8 bis 11, **dadurch gekennzeichnet, daß** es in mindestens zwei aufeinanderfolgenden Stufen durchgeführt wird, wobei in einer ersten Stufe eine Dispersion enthaltend
f) mindestens ein ionisches Tensid mit einem HLB-Wert von 1 bis 10 oder ein nichtionisches Tensid mit einem HLB-Wert von 13 bis 20 oder ein Gemisch aus zwei oder mehr davon,
g) mindestens einen anorganischen Füllstoff mit einer Partikelgröße (d50) von 0,01 bis 0,5 µm,
h) mindestens einen Polymerisationsinitiator und
i) mindestens ein wasserlösliches organisches Polymeres mit einem Molekulargewicht von mehr als 600 und einem HLB-Wert von mehr als 15 hergestellt wird, die Dispersion auf eine Temperatur von 70 bis 90 °C gebracht und anschließend in einer zweiten Stufe
j) mindestens ein radikalisch polymerisierbares Monomeres zugegeben und polymerisiert wird.

13. Verfahren nach Anspruch 12, **dadurch gekennzeichnet, daß** die Zugabe der anorganischen Füllstoffpartikel vor der Zugabe des Polymerisationsinitiators erfolgt.

14. Verfahren nach Anspruch 8, **dadurch gekennzeichnet, daß** die in der wäßrigen Phase dispergierten Füllstoffpartikel mit einem oder mehreren Monomeren voremulgiert werden.

15. Verfahren nach Anspruch 14, **dadurch gekennzeichnet, daß** der Voremulsion Polymerisationsinitiatoren portionsweise zugegeben werden.

16. Klebstoff, **dadurch gekennzeichnet, daß** dieser mindestens eine füllstoffhaltige Polymerdispersion nach einem der Ansprüche 1 bis 7 enthält.

17. Oberflächenbeschichtungsmittel, **dadurch gekennzeichnet, daß** dieses mindestens eine füllstoffhaltige Polymerdispersion nach einem der Ansprüche 1 bis 7 enthält.

## Claims

1. A filler-containing polymer dispersion which contains water, particles of at least one organic or at least one inorganic filler or a mixture thereof (filler particles) and particles of at least one synthetic organic polymer polymerized in the presence of filler particles of at least one type (polymer particles), **characterized in that** the ratio of the particle size of the filler particles to the particle size of the polymer particles is in the range from 1.1:1 to 20:1.

2. A filler-containing polymer dispersion as claimed in claim 1, **characterized in that** the polymer particles have a diameter (d50) of 0.03 to 0.5 µm.

3. A filler-containing polymer dispersion as claimed in claim 1 or 2, **characterized in that** chalk (CaCO₃), gypsum (CaSO₄) as anhydrite, hemihydrate or dihydrate, silica flour, silica gel, titanium dioxide, talcum, a layer silicate, barium sulfate or barite is present as the inorganic filler and **in that** filler particles containing polyvinyl acetate or copolymers of polyvinyl acetate with one or more polymerizable compounds, polystyrene, polyethylene, polypropylene, waxes, polybutylene, polybutadiene, copolymers of butadiene and styrene, polyacrylonitrile, resins, polyacrylate esters or polymethacrylate esters or polymers containing silyl groups are present as the organic filler.

4. A filler-containing polymer dispersion as claimed in any of claims 1 to 3, **characterized in that** at least one water-soluble organic polymer with a molecular weight of more than 600 and an HLB value of at least 15 is present.

5. A filler-containing polymer dispersion as claimed in any of claims 1 to 4, **characterized in that** at least one ionic surfactant with an HLB value of 1 to 10 is present.

6. A filler-containing polymer dispersion as claimed in any of claims 1 to 5, **characterized in that** at least one nonionic surfactant with an HLB value of 13 to 20 is present.

7. A filler-containing polymer dispersion as claimed in any of claims 1 to 6, **characterized in that** it contains
- 10 to 70% by weight of a water-insoluble organic polymer,
- 5 to 55% by weight of filler particles,
- 0.05 to 0.5% by weight of a nonionic surfactant with an HLB value of 13 to 20,
- 0.01 to 0.1% by weight of an ionic surfactant with an HLB value of 1 to 10,
- 0.05 to 10% by weight of a water-soluble organic polymer with a molecular weight of more than 600 and an HLB value of more than 15,
- 24.89 to 84.89% by weight of water and
- 0 to 30% by weight of other additives.

8. A process for the production of a filler-containing polymer dispersion, **characterized in that** at least one radical-polymerizable monomer is subjected to emulsion polymerization in aqueous phase using a polymerization initiator, the aqueous phase containing filler particles of at least one dispersed filler with a particle size (d50) of 0.01 to 0.5 µm, at least one water-soluble organic polymer with a molecular weight of more than 600 and an HLB value of more than 15.

9. A process as claimed in claim 8, **characterized in that** the aqueous phase contains an ionic surfactant.

10. A process as claimed in claim 8 or 9, **characterized in that** the aqueous phase contains a nonionic surfactant.

11. A process as claimed in any of claims 8 to 10, **characterized in that** a water-soluble polymerization initiator is used.

12. A process as claimed in any of claims 8 to 11, **characterized in that** it is carried out in at least two successive stages, a dispersion containing
f) at least one ionic surfactant with an HLB value of 1 to 10 or a nonionic surfactant with an HLB value of 13 to 20 or a mixture of two or more thereof,
g) at least one inorganic filler with a particle size (d50) of 0.01 to 0.5 µm,
h) at least one polymerization initiator and
i) at least one water-soluble organic polymer with a molecular weight of more than 600 and an HLB value of more than 15 being prepared in a first stage and then heated to a temperature of 70 to 90°C and
j) at least one radical-polymerizable monomer
being added and polymerized in a second stage.

13. A process as claimed in claim 12, **characterized in that** the inorganic filler particles are added before the polymerization initiator.

14. A process as claimed in claim 8, **characterized in that** the filler particles dispersed in the aqueous phase are pre-emulsified with one or more monomers.

15. A process as claimed in claim 14, **characterized in that** polymerization initiators are added in portions to the preliminary emulsion.

16. An adhesive, **characterized in that** it contains at least one filler-containing polymer dispersion according to any of claims 1 to 7.

17. A surface coating composition, **characterized in that** it contains at least one filler-containing polymer dispersion according to any of claims 1 to 7.

## Revendications

1. Dispersion polymère contenant des charges, qui contient de l'eau, des particules d'au moins une charge organique ou d'au moins une charge inorganique ou leur mélange (particules de charge) et des particules d'au moins un polymère organique synthétique, qui a été polymérisé en présence d'au moins un type de particules de charge (particules de polymère), **caractérisée en ce que** le rapport de la grosseur des particules de charge à la grosseur des particules de polymère est de 1,1:1 à 20:1.

2. Dispersion polymère contenant des charges selon la revendication 1, **caractérisée en ce que** les particules de polymère présentent un diamètre (d50) de 0,03 à 0,5 µm.

3. Dispersion polymère contenant des charges selon la revendication 1 ou 2, **caractérisée en ce qu'**elle contient comme charge inorganique de la craie (CaCO₃), du gypse (CaSO₄) sous forme d'anhydrite, semi-hydratée ou dihydratée, de la poudre de quartz, du gel silicique, du dioxyde de titane, du talc, du silicate à couches, du sulfate de baryum ou de la baryte et comme charge organique des particules de charge contenant du poly(acétate de vinyle) ou des copolymères de poly(acétate de vinyle) avec un ou plusieurs composés polymérisables, le polystyrène, le polyéthylène, le polypropylène, des cires, le polybutylène, le polybutadiène, des copolymères de butadiène et de styrène, le polyacrylonitrile, des résines, le poly(ester d'acrylate) ou le poly(ester de méthacrylate) ou des polymères contenant des groupes silyle.

4. Dispersion polymère contenant des charges selon l'une quelconque des revendications 1 à 3, **caractérisée en ce qu'**elle contient au moins un polymère organique soluble dans l'eau présentant un poids moléculaire supérieur à 600 et une valeur BLH d'au moins 15.

5. Dispersion polymère contenant des charges selon l'une quelconque des revendications 1 à 4, **caractérisée en ce qu'**elle contient au moins un agent tensioactif ionique présentant une valeur BLH de 1 à 10.

6. Dispersion polymère contenant des charges selon l'une quelconque des revendications 1 à 5, **caractérisée en ce qu'**elle contient au moins un agent tensioactif non ionique présentant une valeur BLH de 13 à 20.

7. Dispersion polymère contenant des charges selon l'une quelconque des revendications 1 à 6, **caractérisée en ce qu'**elle contient
- 10 à 70% en poids d'un polymère organique non soluble dans l'eau
- 5 à 55 % en poids de particules de charge
- 0,05 à 0,5% en poids d'un agent tensioactif non ionique présentant une valeur BLH de 13 à 20,
- 0,01 à 0,1% en poids d'un agent tensioactif ionique présentant une valeur BLH de 1 à 10,
- 0,05 à 10% en poids d'un polymère organique soluble dans l'eau présentant un poids moléculaire supérieur à 600 et une valeur BLH supérieure à 15,
- 24,89 à 84,89% en poids d'eau et
- 0 à 30% en poids d'autres additifs.

8. Procédé pour la préparation d'une dispersion polymère contenant des charges, **caractérisé en ce qu'**au moins un monomère polymérisable par voie radicalaire est soumis à une polymérisation dans une émulsion en phase aqueuse en utilisant un initiateur de polymérisation, la phase aqueuse contenant des particules de charge d'au moins une charge dispersée présentant une grosseur de particule (d50) de 0,01 à 0,5 µm, au moins un polymère organique soluble dans l'eau présentant un poids moléculaire supérieur à 600 et une valeur BLH supérieure à 15.

9. Procédé selon la revendication 8, **caractérisé en ce que** la phase aqueuse contient un agent tensioactif ionique.

10. Procédé selon la revendication 8 ou 9, **caractérisé en ce que** la phase aqueuse contient un agent tensioactif non ionique.

11. Procédé selon l'une quelconque des revendications 8 à 10, **caractérisé en ce qu'**on utilise un initiateur de polymérisation soluble dans l'eau.

12. Procédé selon l'une quelconque des revendications 8 à 11, **caractérisé en ce qu'**il est réalisé en au moins deux étapes consécutives, lors desquelles on prépare, dans une première étape, une dispersion contenant
f) au moins un agent tensioactif ionique présentant une valeur BLH de 1 à 10 ou un agent tensioactif non ionique présentant une valeur BLH de 13 à 20 ou un mélange de deux ou de plusieurs de ceux-ci,
g) au moins une charge inorganique présentant une grosseur de particules (d50) de 0,01 à 0,5 µm,
h) au moins un initiateur de polymérisation et
i) au moins un polymère organique soluble dans l'eau présentant un poids moléculaire supérieur à 600 et une valeur BLH supérieure à 15,
la dispersion est amenée à une température de 70 à 90°C et on ajoute ensuite dans une deuxième étape
j) au moins un monomère polymérisable par voie radicalaire
et on polymérise.

13. Procédé selon la revendication 12, **caractérisé en ce que** l'addition des particules de charge inorganique est réalisée avant l'addition de l'initiateur de polymérisation.

14. Procédé selon la revendication 8, **caractérisé en ce que** les particules de charge dispersées dans la phase aqueuse sont émulsifiées au préalable avec un ou plusieurs monomères.

15. Procédé selon la revendication 14, **caractérisé en ce qu'**on ajoute les initiateurs de polymérisation par portions à l'émulsion préalable.

16. Adhésif, **caractérisé en ce qu'**il contient au moins une dispersion polymère contenant des charges selon l'une quelconque des revendications 1 à 7.

17. Agent de revêtement de surface, **caractérisé en ce qu'**il contient au moins une dispersion polymère contenant des charges selon l'une quelconque des revendications 1 à 7.
